# EUROPÄISCHE PATENTSCHRIFT

(11) **EP 4 259 471 B1**
(45) Veröffentlichungstag und Bekanntmachung des Hinweises auf die Patenterteilung: **18.11.2026**
(21) Anmeldenummer: 21834783.9
(22) Anmeldetag: 08.12.2021
(51) Int. Cl.: B60L 7/22, B60L 53/10, B60L 58/13

(54) **VERFAHREN UND VORRICHTUNG ZUR BEREITSTELLUNG EINER SPEICHERKAPAZITÄTSRESERVE IN EINER TRAKTIONSBATTERIE FÜR EINE BEVORSTEHENDE GEFÄLLEFAHRT**
METHOD AND DEVICE FOR PROVIDING A STORAGE CAPACITY RESERVE IN A TRACTION BATTERY FOR AN IMMINENT DOWNHILL DRIVE
PROCÉDÉ ET DISPOSITIF POUR FOURNIR UNE RÉSERVE DE CAPACITÉ DE STOCKAGE DANS UNE BATTERIE DE TRACTION POUR UNE CONDUITE EN PENTE IMMINENTE

(30) Priorität: 11.12.2020 DE 102020133118
(43) Veröffentlichungstag der Anmeldung: 18.10.2023
(73) Patentinhaber: MAN Truck & Bus SE, 80995 München (DE)
(72) Erfinder: WAGNER, Philipp, 80995 München (DE); HAUPT, Christian, 80995 München (DE); ENGASSER, Julius, 80995 München (DE)
(74) Vertreter: v. Bezold & Partner Patentanwälte - PartG mbB
(86) Internationale Anmeldenummer: PCT/EP2021/084796
(87) Internationale Veröffentlichungsnummer: WO 2022/122820

(56) Entgegenhaltungen:
- JP-A- 2019 047 687
- JP-A- 2020 088 940
- US-A1- 2015 251 558
- US-A1- 2016 325 637

## Beschreibung

Die Erfindung betrifft ein Verfahren und eine Vorrichtung zur Bereitstellung einer Speicherkapazitätsreserve in einer Traktionsbatterie für ein elektrisch angetriebenes Kraftfahrzeug, vorzugsweise Nutzfahrzeug, für eine bevorstehende Gefällefahrt, sowie ein elektrisch angetriebenes Kraftfahrzeug, vorzugsweise ein Nutzfahrzeug, das die Vorrichtung aufweist.

Kraftfahrzeuge, insbesondere Nutzfahrzeuge, können längere Gefällestrecken nicht alleine mit herkömmlichen Reibungsbremsen bewältigen, da die eingetragene Wärmeleistung der Reibungsbremsen diese nach kurzer Zeit überhitzen lassen und zu einem hohen Verschleiß der Reibungsbremsen führen.

Bei verbrennungsmotorisch angetriebenen Fahrzeugen verwenden daher heutige Personenkraftwagen und leichte Nutzfahrzeuge die bekannte Motorbremsfunktion, schwere Nutzfahrzeuge sind zusätzlich mit separaten Dauerbremssystemen zum verschleißfreien Dauerbremsen, beispielsweise einem Primär- und/oder Sekundär-Retarder, ausgestattet. Ein Primär-Retarder ist üblicherweise motorseitig im Kraftfluss vor dem Getriebe angeordnet, und ein Sekundär-Retarder ist im Kraftfluss hinter dem Getriebe angeordnet.

Elektrisch angetriebene Kraftfahrzeuge können im Bremsfall die Energiewandlung umkehren, d. h., der Elektromotor wirkt als Generator und wandelt die kinetische Energie des Kraftfahrzeugs durch rekuperatives Bremsen in elektrische Energie um, wobei die Antriebsachse einem rekuperativen Bremsmoment unterliegt. Bei diesem als Rekuperation bezeichneten Vorgang wird die elektrische Energie in die Traktionsbatterien zurückgespeichert, was voraussetzt, dass entsprechend freie Speicherkapazität vorhanden ist.

Im Falle voller Traktionsbatterien muss die entstehende Energie anderweitig abgeführt werden, z. B. in einem Bremswiderstand in Wärme umgewandelt werden, und geht dabei für zukünftige Traktionszwecke verloren. Dieses Problem tritt insbesondere beim rekuperativen Dauerbremsen auf, wie es bei längeren Gefällestrecken notwendig sein kann, da hier viel rekuperierte Bremsenergie erzeugt wird. Insbesondere Nutzfahrzeug erzeugen aufgrund ihres Gewichts bei längeren Gefällefahrten beim rekuperativen Dauerbremsen viel rekuperierte Bremsenergie, die als Wärmeenergie verlorenen geht, wenn sie aufgrund fehlender Speicherkapazität der Traktionsbatterie nicht gespeichert werden kann.

Aus energetischer, wirtschaftlicher und ökologischer Sicht ist dieser Zustand unbefriedigend.

Der Erfindung liegt somit die Aufgabe zu Grunde, eine verbesserte Technik bereitzustellen, die ein verschleißfreies rekuperatives Dauerbremsen ermöglicht und die Nachteile herkömmlicher Ansätze vermeidet. Insbesondere besteht die Aufgabe darin, das Energierückgewinnungspotential durch rekuperatives Dauerbremsen mit möglichst hoher Effizienz und damit aus energetischer, wirtschaftlicher und ökologischer Sicht verbessert auszunutzen.

Die Aufgabe wird gelöst durch die Merkmale der unabhängigen Ansprüche. Vorteilhafte Weiterbildungen sind in den abhängigen Ansprüchen und der Beschreibung angegeben.

Gemäß einem ersten allgemeinen Aspekt der Erfindung wird ein Verfahren zur Bereitstellung einer Speicherkapazitätsreserve in einer Traktionsbatterie für ein elektrisch angetriebenes Kraftfahrzeug, vorzugsweise Nutzfahrzeug, für eine bevorstehende Gefällefahrt bereitgestellt. Das Verfahren umfasst ein Erkennen, ob ein elektrischer Ladevorgang der Traktionsbatterie mittels einer externen Ladequelle bevorsteht, und ein Bestimmen einer oder mehrerer möglicher Gefällestrecken für eine nach dem elektrischen Ladevorgang bevorstehende Gefällefahrt. Anders ausgedrückt wird eine Vorhersage oder Abschätzung getroffen, ob und welche Gefällestrecke(n) für eine Weiterfahrt nach dem externen Ladevorgang in Betracht kommt bzw. kommen. Das Verfahren umfasst ferner ein Vorhersagen oder Abschätzen einer oder mehrerer Mengen an rekuperierter Energie, die durch das Kraftfahrzeug entlang jeweils einer der bestimmten Gefällestrecken rekuperiert werden, und ein Festlegen, z. B. ein Absenken, eines maximalen Batterieladezustands der Traktionsbatterie für den Ladevorgang mittels der externen Ladequelle in Abhängigkeit von der vorhergesagten Menge oder den vorhergesagten Mengen an rekuperierter Energie.

Mit anderen Worten besteht ein Grundgedanke der Erfindung darin, bei einem externen Ladevorgang, z. B. an einer Ladesäule, die Traktionsbatterie nicht vollständig zu laden, wenn absehbar ist, dass nach dem Ladevorgang eine Gefällefahrt ansteht, bei der mehr elektrische Energie rekuperiert werden kann als verbraucht wird. In diesem Fall wird in Antizipation der nach dem Ladevorgang bei der Gefällefahrt rekuperierbaren Energie der maximale Batterieladezustand für den Ladevorgang, d. h. der Ladezustand, bis zu dem beim nächsten externen Ladevorgang die Traktionsbatterie maximal aufgeladen wird, gezielt abgesenkt, um eine Speicherkapazitätsreserve in der Traktionsbatterie vorzuhalten, um möglichst viel dieser zukünftig rekuperierten Energie in der Traktionsenergie speichern zu können und möglichst wenig in Form von Wärme an die Umwelt abgeben zu müssen. Wie weit der maximale Batterieladezustand für den Ladevorgang abgesenkt wird, wird in Abhängigkeit von einer Vorhersage oder Abschätzung der bei der Gefällefahrt rekuperierbaren Menge an Energie ermittelt.

Vorteilhaft kann ein Energierückgewinnungspotential durch rekuperatives Dauerbremsen bei einer bevorstehenden Gefällefahrt mit möglichst hoher Effizienz ausgenutzt werden. Die Menge an rekuperierter Energie kann optimiert werden, um ein rekuperatives Dauerbremsen bei der bevorstehenden Gefällefahrt zu gewährleisten, ohne die Traktionsbatterie zu überladen, und vorzugsweise den Einsatz von Bremswiderständen zu vermeiden oder zumindest zu reduzieren. Der maximale zulässige Ladezustand kann derart festgelegt werden, dass er eine genügende Speicherkapazitätsreserve der Traktionsbatterie für ein erforderliches Dauerbremsen bei der bevorstehenden Gefällefahrt und die dabei rekuperierte Energie übriglässt.

Eine Gefällestrecke zeichnet sich dadurch aus, dass ein Streckenanfang der Gefällestrecke eine höhere Geländehöhe aufweist als ein Streckenende der Gefällestrecke. Bei einer Fahrt entlang der Gefällestrecke wird durch das Kraftfahrzeug, stetig oder zumindest abschnittsweise, rekuperierte Energie aufgenommen. Bei der Fahrt entlang der Gefällestrecke wird durch das Kraftfahrzeug insgesamt mehr elektrische Energie rekuperiert als verbraucht, d. h. mehr elektrische Energie aus der Traktionsbatterie gespeichert als entnommen.

Dies schließt nicht aus, dass die Gefällestrecke Abschnitte aufweist, entlang denen das Kraftfahrzeug mehr elektrische Energie verbraucht als rekuperiert. Die Gefällestrecke kann ebene oder ansteigende Abschnitte aufweisen, entlang denen das Kraftfahrzeug mehr elektrische Energie verbraucht als rekuperiert. Die Gefällestrecke kann Abschnitte aufweisen, entlang denen das Kraftfahrzeug mehr elektrische Energie verbraucht als rekuperiert, solange über die gesamte Gefällestrecke mehr elektrische Energie rekuperiert als verbraucht wird.

Die rekuperierte Energie entspricht einer potentiellen Energie des Kraftfahrzeugs, die bei einem Verzögern des Kraftfahrzeugs (d. h. bei einem Bremsvorgang des Kraftfahrzeugs) in elektrische Energie umgewandelt und in der Traktionsbatterie gespeichert wird, sofern dort entsprechende Speicherkapazität vorliegt. Die rekuperierte Energie wird durch eine elektrische Maschine erzeugt. Die elektrische Maschine kann als elektrischer Motor zum Antrieb des Kraftfahrzeugs und bei dem Bremsvorgang, z. B. wenn der Fahrer das Bremspedal des Kraftfahrzeugs betätigt, als Generator und damit gleichzeitig als Bremse wirken.

Die rekuperierte Energie kann einer Energiebilanz der durch die Traktionsbatterie aufgenommenen und abgegebenen elektrischen Energie entsprechen. Die Energiebilanz weist entlang der gesamten Gefällestrecke eine positive Energiebilanz auf (d. h., es wird mehr elektrische Energie aufgenommen als abgegeben). Ferner kann die Energiebilanz die notwendige elektrische Energie für die Fahrt des Kraftfahrzeugs von der Ladeposition bis zum Streckenanfang der Gefällestrecke berücksichtigen.

Ein Batterieladezustand ist ein Parameter, der ein Maß für den Ladezustand der Traktionsbatterie angibt bzw. aus dem der Ladezustand ableitbar ist. Beispielsweise kann der Batterieladezustand den Ladezustand relativ zur Ladekapazität der Traktionsbatterie angeben, wobei eine vollständig geladene Traktionsbatterie einen Batterieladezustand von 100 % aufweist. Der Batterieladezustand wird auch als "State of Charge" bzw. SoC bezeichnet.

Der maximale Batterieladezustand der Traktionsbatterie für den nächsten Ladevorgang mittels der externen Ladequelle gibt eine Grenze an, bis zu der die Traktionsbatterie beim Ladevorgang mittels der externen Ladequelle zulässig geladen werden kann. Bei Erreichen des maximalen Batterieladezustands wird der externe Ladevorgang automatisch vom Kraftfahrzeug beendet. Die erfindungsgemäße Anpassung des Batterieladezustands gilt vorzugsweise nur für den nächsten Ladevorgang mittels der externen Ladequelle. Im Betrieb kann und soll dieser maximale Batterieladezustand durch Speicherung von rekuperativ gewonnener Energie überschritten werden.

Üblicherweise wird der maximale Batterieladezustand zur Verbesserung der Lebensdauer der Traktionsbatterie auf einen Wert unter 100 % der maximalen Speicherkapazität festgelegt, z. B. auf 85 %. Der Ladevorgang wird beendet, wenn der maximale Batterieladezustand erreicht ist. Im Rahmen der Erfindung wird dieser maximale Ladezustand für ein externes Laden der Traktionsbatterie gezielt abgesenkt, falls z. B. eine Weiterfahrt bergab vorhergesagt wird und damit verbunden eine Energierückgewinnung durch rekuperatives Bremsen. Der maximale Batterieladezustand kann verwendet werden, um Ladevorgänge an einem höhergelegenen Standort automatisch bei einem Batterieladezustand gleich dem maximalen Batterieladezustand zuverlässig zu beenden, um damit eine ausreichende Speicherkapazität zur Aufnahme rekuperierter Energie bei Weiterfahrt bergab bereitzustellen.

Gemäß einer besonders bevorzugten Ausführungsform kann unter den vorhergesagten Mengen an rekuperierter Energie die höchste Menge ausgewählt und der maximale Batterieladezustand in Abhängigkeit von der höchsten Menge festgelegt werden. Der maximale Batterieladezustand kann sich aus einer Speicherkapazität oder aus einem Sollwert für den maximalen Batterieladezustand der Traktionsbatterie abzüglich der ausgewählten höchsten Menge ergeben.

Vorteilhaft kann ein rekuperatives Dauerbremsen bei der bevorstehenden Gefällefahrt entlang jeder der bestimmten Gefällestrecken gewährleistet werden, ohne die Traktionsbatterie zu überladen und den Einsatz von Bremswiderständen zu vermeiden. So kann der festgelegte maximale Batterieladezustand der geringste unter den möglichen maximalen Batterieladezuständen der möglichen Gefällestrecken sein. Es wird damit der maximale Batterieladezustand ausgewählt, der die größte Speicherkapazitätsreserve der Traktionsbatterie bereitstellt, um ein Überladen der Traktionsbatterie zu vermeiden, unabhängig davon, welche der möglichen Gefällestrecken der Fahrer letztendlich für die Weiterfahrt wählt.

Gemäß einer besonders bevorzugten Ausführungsform kann das Festlegen eines maximalen Batterieladezustands ein manuelles Auswählen einer der bestimmten Gefällestrecken und/oder einer der vorhergesagten Mengen an rekuperierter Energie durch einen Benutzer über einen Ladedialog umfassen und der maximale Batterieladezustand in Abhängigkeit von der ausgewählten Gefällestrecke und/oder der ausgewählten Menge an rekuperierter Energie festgelegt werden.

Alternativ oder ergänzend kann der festgelegte maximale Batterieladezustand für den nächsten externen Ladevorgang manuell durch den Benutzer über einen Ladedialog veränderbar sein und/oder verändert werden. Es kann auch vorgesehen sein, dass der Benutzer im Rahmen eines Ladedialogs die vorgeschlagene Absenkung des maximalen Batterieladezustands bestätigen muss, z. B. indem der Benutzer mittels eines Dreh-Drückstellers als Bedienelement eine Absenkung des maximalen Batterieladezustands für den nächsten externen Ladevorgang bestätigt. Alternativ oder ergänzend kann eine Bestätigung der vorgeschlagenen Absenkung des maximalen Batterieladezustands per Spracheingabe und/oder auf einem berührungsempfindlichen Bildschirm per Touch-Eingabe erfolgen. So kann verhindert werden, dass der Benutzer nicht von einem überraschend niedrig aufgeladenen Traktionsenergiespeicher bei der Weiterfahrt "überrascht" wird.

Unter dem Begriff "Ladedialog" wird eine Benutzerinteraktion, z. B. über das Fahrzeug-Infotainmentsystem, verstanden, die optional gemäß der vorstehend beschriebenen Ausführungsformen durchgeführt wird, wenn das Verfahren zur Bereitstellung einer Speicherkapazitätsreseverve in der Traktionsbatterie fahrzeugseitig durchgeführt wird.

Es ist auch vorstellbar, dass die Benutzerinteraktion mittels eines tragbaren Geräts, z. B. eines mobilen Endgeräts, erfolgt. Die vorgeschlagene Absenkung des maximalen Batterieladezustands kann beispielsweise mittels einer Applikation auf einem Bildschirm des tragbaren Geräts angezeigt werden. Die Bestätigung des Benutzers kann mittels der Applikation und einer Eingabeeinheit des tragbaren Geräts, z. B. eines Touchscreens, erfasst werden.

Ferner alternativ oder ergänzend kann die Strecke zur bevorstehenden Gefällefahrt durch den Benutzer manuell, beispielsweise mittels eines Navigationssystems, angegeben werden und der maximale Batterieladezustand in Abhängigkeit von der manuell angegebenen Strecke festgelegt werden.

Durch das manuelle Auswählen kann der in Abhängigkeit von der höchsten Menge festgelegte maximale Batterieladezustand verändert werden und damit die Genauigkeit der Anpassung des maximalen Batterieladezustands verbessert werden.

Vorteilhaft kann der Benutzer, z. B. der Fahrer, selbst die nach dem Ladevorgang anstehende Fahrtstrecke, somit ggf. die Gefällestrecke für die Gefällefahrt nach dem elektrischen Ladevorgang festlegen bzw. den maximale Batterieladezustand manuell verändern, wodurch ein rekuperatives Dauerbremsen entlang der gesamten festgelegten Gefällestrecke gewährleistet werden kann und die Traktionsbatterie am Ende der Gefällefahrt bis zu ihrer Speicherkapazität bzw. dem Sollwert geladen ist. Dem Benutzer wird somit die Möglichkeit gegeben, den systemseitig automatisch generierten Vorschlag des maximalen Batterieladezustands oder der in Betracht kommenden Strecke für die Weiterfahrt manuell zu verändern, indem entweder die aus Benutzersicht "richtige" Gefällestrecke bzw. Strecke für die Weiterfahrt eingegeben wird oder direkt der aus Benutzersicht präferierte oder korrigierte Wert für den maximale Batterieladezustand, bei dem der bevorstehende externe Ladevorgang abgebrochen wird, vorgegeben wird.

Gemäß einer weiteren Ausführungsvariante können die Mengen an rekuperierter Energie mithilfe eines hinterlegten Kraftfahrzeugmodells vorhergesagt werden. Kraftfahrzeugmodelle für elektrisch angetriebene Kraftfahrzeuge, die eine Energiebilanz (Menge an rekuperierte Energie vs. Menge an verbrauchter Energie) auch unter Berücksichtigung von topographischen Höhendaten entlang einer vorausliegenden Fahrtroute abschätzen, sind an sich aus dem Stand der Technik bekannt, z. B. um die Reichweite des rein elektrisch angetriebenen Fahrzeugs vorherzusagen.

Gemäß einer bevorzugten Ausführungsvariante können die Mengen an rekuperierter Energie mithilfe eines hinterlegten Kraftfahrzeugmodells vorhergesagt werden, das zumindest einen, vorzugsweise mehrere der folgenden Parameter für die bevorstehende Gefällefahrt berücksichtigt: eine Gefälleneigung, eine Geschwindigkeit des Kraftfahrzeugs, eine Beladung des Kraftfahrzeugs, Wetter- und Temperaturdaten und einen Energieverbrauch von Kraftfahrzeugverbrauchern, beispielsweise einer Kühlung, einer Klimatisierung, einer Heizung oder von Aufbauten, beispielsweise einem Kühlkoffer.

Der Energieverbrauch von Kraftfahrzeugverbrauchern kann einen aktuellen Energieverbrauch und/oder einen erwarteten Energieverbrauch während der Gefällefahrt umfassen. Der aktuelle Energieverbrauch kann durch die aktuelle elektrische Energie, die aus der Traktionsbatterie entnommen wird, bestimmt werden. Der erwartete Energieverbrauch kann unter Berücksichtigung der Wetter- und Temperaturdaten und/oder der Jahreszeit bestimmt werden.

Das hinterlegte Kraftfahrzeugmodell kann aus Fahrzyklen und/oder realen Fahrzeugmessungen bestimmt oder verfeinert sein, anhand derer experimentell die Menge an rekuperierter Energie für unterschiedliche Werte der im Kraftfahrzeugmodell berücksichtigten Parameter für unterschiedliche Gefällestrecken ermittelt wird und die beispielsweise eine Dauer und Intensität der Dauerbremse je nach Gefälleneigung berücksichtigen.

Das Vorhersagen der Mengen an rekuperierter Energie mithilfe des hinterlegten Kraftfahrzeugmodells kann ein Erfassen der Parameter umfassen. Die Beladung des Kraftfahrzeugs und/oder die Wetter- und Temperaturdaten können manuell über einen Ladedialog angeben werden. Die Wetter- und Temperaturdaten können mittels einer Sensorik bestimmt werden. Die Wetter- und Temperaturdaten können über eine Funkverbindung von einer externen Wetterstation und/oder einem externen Wetterinformationssystem erfasst werden. Die Gefälleneigung der Gefällestrecke kann anhand von Topographiedaten bestimmt werden. Die Geschwindigkeit des Kraftfahrzeugs kann anhand von Geschwindigkeitsbeschränkungen, die entlang der Gefällestrecke gelten, und/oder aktuellen Verkehrsdaten der Gefällestrecke bestimmt werden. Die aktuellen Verkehrsdaten können über eine Funkverbindung von einem externen Verkehrsinformationssystem erfasst werden.

Vorteilhaft kann berücksichtigt werden, in welchem Maße die Menge an rekuperierter Energie durch verschiedene Einflüsse beeinflusst wird. Beispielsweise kann die Beladung und damit das Gewicht des Kraftfahrzeugs Einfluss auf die Menge an rekuperierter Energie haben, insbesondere bei Nutzfahrzeugen. So ist mit höherem Gewicht auch eine höhere Intensität der Dauerbremse notwendig, d. h., mit höherem Gewicht steigt auch die Menge an rekuperierter Energie. Ferner vorteilhaft kann berücksichtigt werden, wie viel elektrische Energie, insbesondere zum Betrieb von Nebenverbrauchern, bei der Gefällefahrt aus der Traktionsbatterie entnommen wird. Die Wetter- und Temperaturdaten können z. B. einen Anhalt über eine zu erwartende Kühl- oder Heizleistung geben.

Das hinterlegte Kraftfahrzeugmodell kann ein oder mehrere mehrdimensionale Kennfelder umfassen. Die Kennfelder können die Parameter und den Zusammenhang zwischen den Parametern berücksichtigen. Das hinterlegte Kraftfahrzeugmodell kann ferner ein oder mehrere Funktionen in Abhängigkeit von den Parametern umfassen. Das hinterlegte Kraftfahrzeugmodell kann durch entsprechende Algorithmen ausgewertet und so die Menge an rekuperierter Energie bestimmt werden.

Gemäß einer weiteren Ausführungsvariante kann der maximale Batterieladezustand ferner in Abhängigkeit von einer Speicherkapazität der Traktionsbatterie, einem aktuellen Ladezustand der Traktionsbatterie und/oder einer aktuellen Fahrzeugmasse, einschließlich einer Zuladung, festgelegt werden. Das Festlegen des maximalen Batterieladezustands kann ein Erfassen der Speicherkapazität der Traktionsbatterie, den aktuellen Ladezustand der Traktionsbatterie und/oder der aktuellen Fahrzeugmasse, einschließlich der Zuladung, umfassen.

Gemäß einer weiteren Ausführungsform kann jede Gefällestrecke der einen oder mehreren Gefällestrecken anhand von Topographiedaten bestimmt werden, wobei zumindest eine der folgenden Bedingungen vorliegen muss:
a) Die Gefällestrecke ist für das Kraftfahrzeug befahrbar;
b) die Länge der Gefällestrecke liegt oberhalb einer vorbestimmten Mindestlänge;
c) ein Streckenanfang der Gefällestrecke liegt innerhalb einer Distanz zu einer Ladeposition, an welcher der elektrische Ladevorgang durchgeführt wird, und weist eine Gefälleneigung oberhalb eines vorbestimmten Grenzwerts, der vorzugsweise aus Fahrzyklen und/oder realen Fahrzeugmessungen bestimmt ist, auf;
d) ein Streckenende der Gefällestrecke weist eine niedrigere Geländehöhe als die Ladeposition und eine Gefälleneigung unterhalb des vorbestimmten Grenzwerts auf, vorzugsweise wobei eine an das Streckenende anschließende Fahrstrecke mit einer vorbestimmten Länge eine mittlere Gefälleneigung unterhalb des vorbestimmten Grenzwerts aufweist.

Ferner kann ein Geländehöhenunterschied der Ladeposition und des Streckenanfangs kleiner als ein vorgegebener Maximalunterschied sein und/oder die Gefällestrecke eine mittlere Gefälleneigung oberhalb des vorbestimmten Grenzwerts aufweisen. Die Gefälleneigung kann auch als Gradient bezeichnet werden.

Anhand der vorstehenden Kriterien wird die Auswahl der in Betracht kommenden Gefällestrecken verbessert. So kann z. B. anhand des vorbestimmten Grenzwerts bestimmt werden, wann die Gefällestrecke "zu Ende" ist, wenn der Wert des Gefälles wieder klein ist und die Strecke, zumindest weitgehend, wieder eben verläuft.

Vorteilhaft können anhand von Topographiedaten in der Nähe der aktuellen Fahrzeugposition, inklusive der Geländehöhe der Fahrzeugposition, mögliche Gefällestrecken bestimmt werden, die von dem Kraftfahrzeug bergab zurückgelegt werden können, bis das Kraftfahrzeug eine tiefer gelegene Ebene erreicht, in der beim Fahren wieder mehr elektrische Energie verbraucht als rekuperiert wird und das aktuelle Gefälle als überwunden angesehen werden kann.

Die Topographiedaten können Straßennetzkarten und/oder topographische Informationen zu Straßennetzen umfassen. Die Straßennetzkarten können dreidimensionale Straßennetzkarten umfassen. Die topographischen Informationen können die Straßennetze anhand der geographischen Längen, Breiten und Höhen beschreiben. Die Topographiedaten können ferner Streckeneigenschaften für jede Strecke der Straßennetze umfassen. Die Streckeneigenschaften für jede Strecke können eine Streckenart (z. B. Innerortsstraße, Landstraße, Autobahn, nicht asphaltierter Fahrweg), eine Streckeninfrastruktur (z. B. Straßenschilder, Ampeln), Geschwindigkeitsbeschränkungen und Informationen, ob die Strecke für Fahrzeugkategorien (z. B. schwere Lastkraftwagen, Lastzüge, Busse) nicht befahrbar ist, umfassen.

Gemäß einer weiteren Ausführungsvariante kann das Erkennen, ob ein elektrischer Ladevorgang der Traktionsbatterie mittels einer externen Ladequelle bevorsteht, ein Erfassen eines aktuellen Standorts des Kraftfahrzeugs und ein Prüfen, ob der erfasste Standort einer für einen elektrischen Ladevorgang geeigneten Standortkategorie entspricht, beispielsweise eine Ladestation, umfassen.

Das Erkennen, ob ein elektrischer Ladevorgang der Traktionsbatterie mittels einer externen Ladequelle bevorsteht, kann ferner ein Erkennen, dass das Kraftfahrzeug mit der externen Ladequelle elektrisch verbunden ist, umfassen.

Das Erkennen, ob ein elektrischer Ladevorgang der Traktionsbatterie mittels einer externen Ladequelle bevorsteht, kann anhand einer Benutzerabfrage, z. B. im Rahmen des Ladedialogs, überprüft werden und/oder kann ferner erst erfolgen, wenn sich das Kraftfahrzeug im Stillstand befindet.

Vorteilhaft kann das Verfahren, vorzugsweise vollständig, automatisiert erfolgen und der maximale Batterieladezustand festgelegt werden, bevor der elektrische Ladevorgang durchgeführt wird.

Gemäß einer weiteren Ausführungsform kann das Verfahren ferner ein elektrisches Laden der Traktionsbatterie, nur bis der festgelegte maximale Batterieladezustand der Traktionsbatterie erreicht ist, umfassen.

Das elektrische Laden kann erst erfolgen, wenn der maximale Batterieladezustand festgelegt ist. Das Verfahren kann ferner ein Ansteuern der externen Ladequelle, z. B. eine Ladestation, zum Beginnen des elektrischen Ladevorgangs, wenn der maximale Batterieladezustand festgelegt ist, und/oder zum Beenden des elektrischen Ladevorgangs, wenn der maximale Batterieladezustand erreicht ist, umfassen.

Gemäß einer weiteren Ausführungsvariante können der Erfindung sind zur Lebensdaueroptimierung der Traktionsbatterie ein unterer Grenzwert, beispielsweise 15 %, und ein oberer Grenzwert, beispielsweise 85 %, für den Ladezustand der Traktionsbatterie festgelegt. Eine Unterschreitung des unteren Grenzwerts und/oder eine Überschreitung des oberen Grenzwerts ist nur in vorbestimmten Ausnahmesituationen zulässig.

Vorteilhaft können der untere und der obere Grenzwert die Traktionsbatterie schützen, z. B. eine Alterung der Traktionsbatterie verringern, indem eine vollständige Ladung bzw. Entladung der Traktionsbatterie ausgeschlossen wird.

Eine Ausnahmesituation, in der eine Überschreitung des oberen Grenzwerts zulässig ist, liegt gemäß der Erfindung vor, wenn anhand von Topographiedaten bestimmt wird, dass innerhalb einer vorbestimmten Zeit und/oder Wegstrecke ein Streckenabschnitt, auf dem mehr elektrische Energie verbraucht als rekuperiert wird, erreicht wird, wobei der obere Grenzwert wieder unterschritten wird.

Vorteilhaft wird das rekuperative Dauerbremsen für die gesamte Gefällefahrt gewährleistet und eine erzwungene Pause wegen einer kurzen Restdistanz vermieden, wobei der Ladezustand der Traktionsbatterie lediglich für einen kurzen Zeitraum oberhalb der oberen Grenze verbleibt. Zur Einhaltung des oberen Grenzwerts bei Vorliegen überschüssiger rekuperierter Energie kann die überschüssige Energie über einen Bremswiderstand als thermische Energie an die Umgebung abführbar sein. Dieser Einsatz des Bremswiderstands kann einem Benutzer in Form einer Warnung und/oder Aufforderung zum Anhalten auf einem Display angezeigt werden. Die Anzeige kann nur bei Erreichen eines thermisch kritischen Zustands des Bremswiderstands erfolgen.

Ein besonderer Vorteil des erfindungsgemäßen Verfahrens zur Bereitstellung einer Speicherkapazitätsreserve ist, dass der Bremswiderstand kleiner dimensioniert sein kann als ein herkömmlicher Bremswiderstand, der für einen Dauerbetrieb ausgelegt ist, bei dem das erfindungsgemäße Verfahren nicht zum Einsatz kommt. Der Grund ist, dass aufgrund des erfindungsgemäßen Verfahrens der Bremswiderstand weniger benötigt wird.

Vorteilhaft kann ein möglichst kleiner Bremswiderstand für Notfälle zum Einsatz kommen, der im normalen Betrieb nicht erforderlich ist. Durch den Bremswiderstand werden die "Bergab-Reserven" des Kraftfahrzeugs für die beim Bremsen erzeugte Energie und damit die Dauerbremsfunktion der elektrischen Maschine deutlich erweitert. Gegenüber einem für einen Dauerbetrieb ohne das erfindungsgemäße Verfahren zur Bereitstellung einer Speicherkapazitätsreserve dimensionierten und gekühlten Bremswiderstand kann so bei nur leicht reduzierter Effizienz ein Mehrwert an Sicherheit und Anwendbarkeit des Fahrzeugs erreicht werden.

Zur Einhaltung des oberen Grenzwerts für den Ladezustand der Traktionsbatterie bei Vorliegen überschüssiger rekuperierter Energie kann ferner ein zeitlich begrenztes zusätzliches Hochfahren von Nebenverbrauchern, beispielsweise einer Heizung und/oder Klimatisierung, durchgeführt werden.

Zur Einhaltung des oberen Grenzwerts bei Vorliegen überschüssiger rekuperierter Energie kann ferner ein Ansteuern eines Inverters des Kraftfahrzeugs durchgeführt werden, derart, dass im Inverter und/oder in einer elektrischen Maschine des Kraftfahrzeugs gezielt eine höhere Verlustleistung erzeugt wird. Eine zusätzlich erzeugte Wärme des Inverters und/oder der elektrischen Maschine kann über ein Kühlsystem an die Umgebung abgeführt werden.

Vorteilhaft kann somit als Gegenmaßnahmen zur überschüssigen rekuperierten Energie der Verbrauch an elektrischer Energie (d. h. die Entnahme an elektrischer Energie aus der Traktionsbatterie) erhöht werden und/oder durch Manipulation des Inverters bzw. der elektrischen Maschine weniger rekuperierte Energie erzeugt werden. Durch diese Gegenmaßnahmen kann die obere Grenze eingehalten und das rekuperatives Dauerbremsen für die gesamte Gefällefahrt gewährleistet werden.

Gemäß einem zweiten allgemeinen Aspekt der Erfindung wird eine Vorrichtung zur Bereitstellung einer Speicherkapazitätsreserve in einer Traktionsbatterie für ein elektrisch angetriebenes Kraftfahrzeug, vorzugsweise ein Nutzfahrzeug, für eine bevorstehende Gefällefahrt bereitgestellt. Das Fahrzeug ist vorzugsweise ein rein elektrisch angetriebenes Kraftfahrzeug. Die Vorrichtung umfasst eine Steuervorrichtung, die ausgebildet ist, das Verfahren wie hierin offenbart durchzuführen.

Zur Vermeidung von Wiederholungen sollen zuvor rein verfahrensgemäß offenbarte Merkmale auch als vorrichtungsgemäß bzw. als funktionale Merkmale der Vorrichtung offenbart gelten und beanspruchbar sein.

Gemäß einer besonders bevorzugten Ausführungsform kann die Vorrichtung ferner eine motorisch betreibbare elektrische Maschine und/oder eine Traktionsbatterie zur Bereitstellung von elektrischer Energie für die elektrische Maschine und zur Aufnahme von durch die elektrische Maschine rekuperierter Energie umfassen. Die elektrische Maschine kann ferner generatorisch, vorzugsweise bei einem Bremsvorgang des Kraftfahrzeugs, zur Erzeugung von rekuperierter Energie betreibbar sein.

Die Vorrichtung kann ferner ein Navigationssystem zur Bereitstellung von Topographiedaten und vorzugsweise zum Bestimmen einer oder mehrerer einer oder mehrerer möglicher Gefällestrecken für eine bevorstehende Gefällefahrt nach einem Ladevorgang des Kraftfahrzeugs umfassen.

Die Vorrichtung kann ferner eine Anzeige- und Eingabeeinrichtung zur Bereitstellung eines Ladedialogs für einen Benutzer des Kraftfahrzeugs umfassen.

Die Vorrichtung kann ferner einen Bremswiderstand, der in einer Ausnahmesituation einsetzbar ist, vorzugsweise wenn ein oberer Grenzwert des Batterieladezustands erreicht ist oder ein thermisch kritischer Zustand, umfassen.

Gemäß einem dritten allgemeinen Aspekt der Erfindung wird ein elektrisch angetriebenes Kraftfahrzeug, vorzugsweise ein Nutzfahrzeug, aufweisend eine Vorrichtung wie hierin offenbart bereitgestellt. Das Kraftfahrzeug ist bevorzugt ausschließlich elektrisch angetrieben bzw. antreibbar (d. h., das Kraftfahrzeug weist keinen Verbrennungsmotor auf).

Die zuvor beschriebenen Ausführungsformen, Varianten und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Ansicht einer Vorrichtung gemäß einer Ausführungsform;
- Figur 2: eine schematische Darstellung eines Verfahrens gemäß einer Ausführungsform; und
- Figur 3: eine schematische Darstellung eines Kraftfahrzeugs gemäß einer Ausführungsform vor einem Ladevorgang.

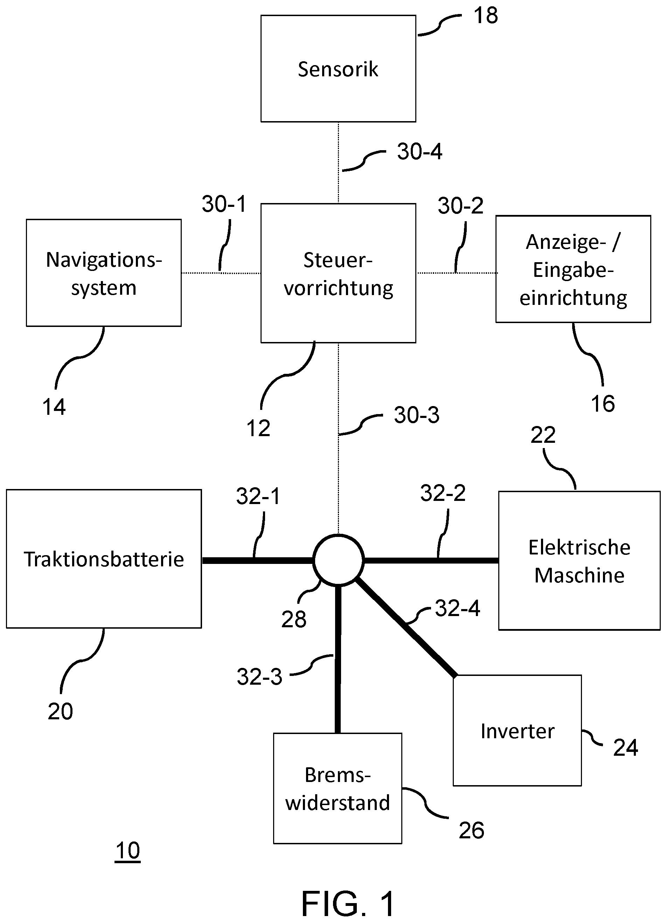

Figur 1 zeigt schematisch die Vorrichtung 10 zur Bereitstellung einer Speicherkapazitätsreserve in einer Traktionsbatterie 20 für ein elektrisch angetriebenes Kraftfahrzeug für eine bevorstehende Gefällefahrt.

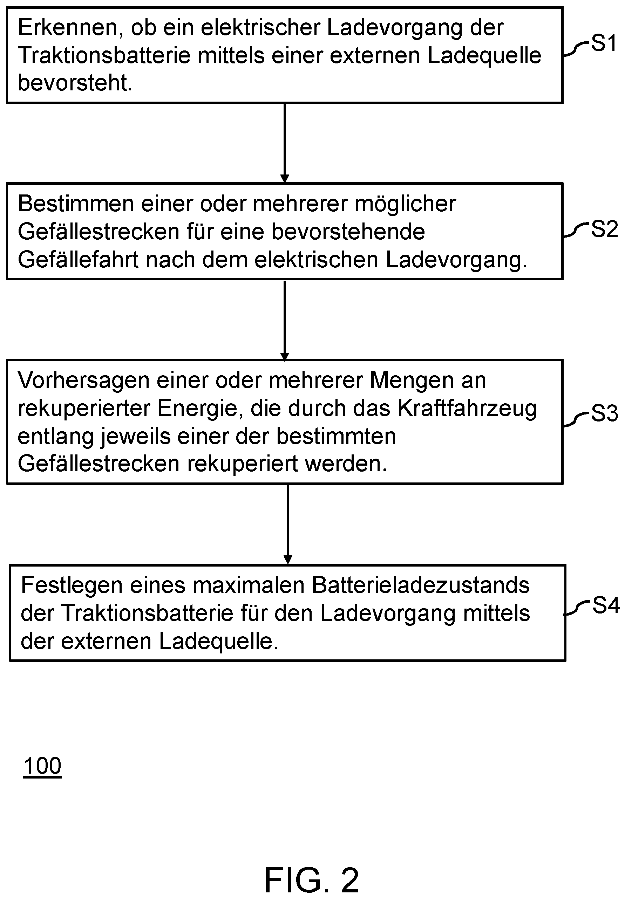

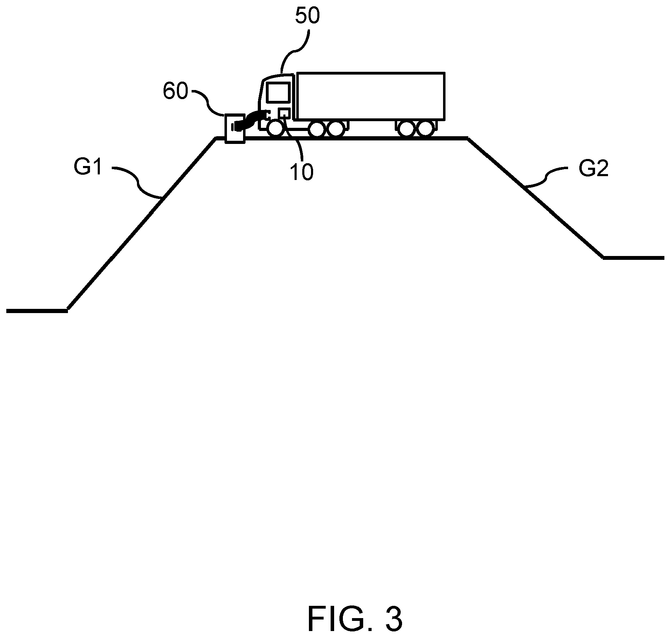

Die Vorrichtung 10 umfasst eine Steuervorrichtung 12, die ausgebildet ist, das Verfahren 100, welches im weiteren Verlauf mit Hilfe der Figuren 2 und 3 näher beschrieben wird, durchzuführen.

Die Vorrichtung 10 kann ferner ein Navigationssystem 14, eine Anzeige- und Eingabeeinrichtungen 16 und/oder eine Sensorik 18 umfassen.

Das Navigationssystem 14 dient zur Bereitstellung von Topographiedaten, und die Anzeige-und Eingabeeinrichtung 16 dient zur Bereitstellung eines Ladedialogs für einen Benutzer des Kraftfahrzeugs 50. Mit der Sensorik 18 können beispielsweise Wetter- und Temperaturdaten bestimmt werden. Das Navigationssystem 14, die Anzeige- und Eingabeeinrichtung 16 und die Sensorik 18 können kommunikationstechnisch über die Kommunikationsleitungen 30-1, 30-2 und 30-4 mit der Steuervorrichtung 12 verbunden sein.

Die Vorrichtung 10 kann ferner eine motorisch betreibbare elektrische Maschine 22, einen Inverter 24, eine Traktionsbatterie 20 und/oder einen Bremswiderstand 26 umfassen. Die elektrische Maschine 22, der Inverter 24 und die Traktionsbatterie 20, welche zur Bereitstellung von elektrischer Energie für die elektrische Maschine 22 und zur Aufnahme von der elektrischen Maschine 22 rekuperierter Energie ausgebildet ist, können Bestandteile eines Antriebsstrangs für ein elektrisch angetriebenes Kraftfahrzeug sein. Der Bremswiderstand 26 kann derart ausgebildet sein, dass er in einer Ausnahmesituation, vorzugsweise wenn ein oberer Grenzwert des Batterieladezustands erreicht ist oder ein thermisch kritischer Zustand, einsetzbar ist.

Die Steuervorrichtung 12 kann ausgebildet sein, die elektrische Maschine 22, den Inverter 24, die Traktionsbatterie 20 und/oder dem Bremswiderstand 26 anzusteuern. Dies kann beispielsweise über eine Leistungselektronik 28 erfolgen, wobei die Steuervorrichtung 12 kommunikationstechnisch über eine Kommunikationsleitung 30-3 mit der Leistungselektronik 28 verbunden ist und die Leistungselektronik 28 wiederum über elektrische Leitungen 32-1, 32-2, 32-3 und 32-4 mit der elektrische Maschine 22, dem Inverter 24, der Traktionsbatterie 20 und dem Bremswiderstand 26 elektrisch verbunden ist.

Figur 2 stellt schematisch das Verfahren 100 zur Bereitstellung einer Speicherkapazitätsreserve in einer Traktionsbatterie 20 für ein elektrisch angetriebenes Kraftfahrzeug 50, vorzugsweise Nutzfahrzeug, für eine bevorstehende Gefällefahrt dar. Ferner zeigt Figur 3 schematisch ein Kraftfahrzeug 50 vor einem elektrischen Ladevorgang.

Das Kraftfahrzeug 50, z. B. ein beladener Lastkraftwagen, fährt zu einem Bergdorf und erreicht das Ziel mit einem niedrigen Ladezustand der Traktionsbatterie 20. Würde nun die Traktionsbatterie 20 an einer externen Ladequelle 60 vollgeladen, könnte die Dauerbremse, bereitgestellt durch einen rekuperativen Bremsbetrieb der elektrischen Maschine 22, auf der Rückfahrt ins Tal nicht eingesetzt werden.

In Schritt S1 des Verfahrens 100 wird zunächst erkannt, ob der elektrische Ladevorgang der Traktionsbatterie 20 mittels einer externen Ladequelle 60 bevorsteht.

Das Bevorstehen des elektrischen Ladevorgangs kann auf verschiedene Arten erkannt werden. Zum einen kann, z. B. mittels des Navigationssystems 14, ein aktueller Standort des Kraftfahrzeugs 50 erfasst und geprüft werden, ob der erfasste Standort einer für einen elektrischen Ladevorgang geeigneten Standortkategorie entspricht. Eine geeignete Standortkategorie kann beispielsweise eine Ladestation oder ein Be- und Entladeterminal sein. Ferner kann erkannt werden, dass das Kraftfahrzeug 50 mit der externen Ladequelle 60 elektrisch verbunden ist, beispielsweise, dass ein Ladekabel über eine entsprechende Ladeschnittstelle mit dem Kraftfahrzeug 50 verbunden ist.

Alternativ oder ergänzend kann das Erkennen, ob der elektrische Ladevorgang der Traktionsbatterie 20 mittels einer externen Ladequelle 60 bevorsteht, anhand einer Benutzerabfrage überprüft werden. So kann z. B. der Fahrer mittels der Anzeige- und Eingabeeinrichtung 16 gefragt werden, ob ein elektrischer Ladevorgang bevorsteht, was wiederum durch den Fahrer durch eine Eingabe bestätigt oder abgelehnt werden kann.

Des Weiteren kann vorgesehen sein, dass das Erkennen, ob der elektrische Ladevorgang der Traktionsbatterie 20 mittels einer externen Ladequelle 60 bevorsteht, erst erfolgt, wenn sich das Kraftfahrzeug 50 im Stillstand befindet.

In Schritt S2 des Verfahrens 100 werden eine oder mehrere mögliche Gefällestrecken für eine bevorstehende Gefällefahrt nach dem elektrischen Ladevorgang bestimmt.

Die Gefällestrecken G1, G2, d. h. alle möglichen Wege zurück ins Tal bzw. in tiefer gelegene Ebenen, können anhand von Topographiedaten des Navigationssystems 14 bestimmt werden.

Beispielweise können die in Figur 3 dargestellten Gefällestrecken G1 und G2 bestimmt werden, die von dem Bergdorf in unterschiedlich tiefer gelegene Ebenen bzw. Täler führen.

Es können eine oder mehrere Bedingungen vorgegeben sein, die zur Bestimmung der Gefällestrecken G1, G2 erfüllt sein müssen. Eine Bedingung kann sein, dass die Gefällestrecke G1, G2 für das Kraftfahrzeug 50 befahrbar ist. Ferner kann gefordert sein, dass die Länge der Gefällestrecke G1, G2 oberhalb einer vorbestimmten Mindestlänge liegt.

Des Weiteren können Bedingungen für einen Streckenanfang und ein Streckenende der Gefällestrecke G1 bzw. G2 definiert sein. Der Streckenanfang kann innerhalb einer Distanz zu einer Ladeposition, an welcher der elektrische Ladevorgang durchgeführt wird, z. B. an einer Position nahe der externen Ladequelle 60, liegen und eine Gefälleneigung oberhalb eines vorbestimmten Grenzwerts aufweisen. Das Streckenende kann eine niedrigere Geländehöhe als die Ladeposition und eine Gefälleneigung unterhalb des vorbestimmten Grenzwerts aufweisen.

Beispielsweise kann gefordert werden, dass alle Bedingungen erfüllt sein müssen, wobei von allen bergab führenden Strecken nur die Gefällestrecken G1 und G2 diese Bedingungen erfüllen und damit für das weitere Verfahren berücksichtigt werden.

In Schritt S3 des Verfahrens 100 werden eine oder mehrere Mengen an rekuperierter Energie, die durch das Kraftfahrzeug 50 entlang jeweils einer der bestimmten Gefällestrecken G1, G2 rekuperiert werden, vorhergesagt.

Die Mengen an rekuperierter Energie können vorhergesagt werden mithilfe eines hinterlegten Kraftfahrzeugmodells, das zumindest einen der folgenden Parameter für die bevorstehende Gefällefahrt berücksichtigt: eine Gefälleneigung, eine Geschwindigkeit des Kraftfahrzeugs 50, eine Beladung des Kraftfahrzeugs 50, Wetter- und Temperaturdaten und einen Energieverbrauch von Kraftfahrzeugverbrauchern. Vorstehend wurde bereits dargelegt, dass die Gefällestrecke in Summe bzw. effektiv zu einem Überschuss an rekuperierter Energie führt, wobei ein elektrischer Energieverbrauch auf Teilabschnitten der "Gefällestrecke", die z. B. bergauf gehen, entsprechend bei der vorhergesagten Menge an rekuperierter Energie berücksichtigt wird.

Ein oder mehrere Parameter, die durch das Kraftfahrzeugmodell berücksichtigt werden, können über den von der Anzeige- und Eingabeeinrichtung 16 bereitgestellten Ladedialog manuell angegeben werden und/oder mittels der Sensorik 18 bestimmt werden, z. B. die Beladung des Kraftfahrzeugs 50 und/oder die Wetter- und Temperaturdaten.

In Schritt S4 des Verfahrens 100 wird ein maximaler Batterieladezustand der Traktionsbatterie 20 für den Ladevorgang mittels der externen Ladequelle 60 in Abhängigkeit von den vorhergesagten Mengen an rekuperierter Energie festgelegt.

Vorzugsweise wird der maximale Batterieladezustand automatisch bestimmt, derart, dass unter den vorhergesagten Mengen an rekuperierter Energie die höchste Menge ausgewählt und der maximale Batterieladezustand in Abhängigkeit von der höchsten Menge festgelegt wird. Beispielsweise kann anhand der in Schritt S3 vorhergesagten Mengen an rekuperierter Energie festgestellt werden, dass durch das Kraftfahrzeug 50 entlang der Gefällestrecke G1 eine höhere Menge an rekuperierter Energie rekuperiert werden kann als entlang der Gefällestrecke G2, und daher der maximale Batterieladezustand in Abhängigkeit von der vorhergesagten Menge entlang der Gefällestrecke G1 festgelegt werden.

Der maximale Batterieladezustand kann sich aus einer Speicherkapazität oder aus einem Sollwert für den maximalen Batterieladezustand der Traktionsbatterie 20 abzüglich der ausgewählten höchsten Menge ergeben.

Der Sollwert ist ein oberer Grenzwert, beispielsweise 85 %, für den Ladezustand der Traktionsbatterie 20, der zur Lebensdaueroptimierung der Traktionsbatterie 20 festgelegt und üblicherweise nicht überschritten wird. Neben dem oberen Grenzwert ist generell auch ein unterer Grenzwert, beispielsweise 15 %, festgelegt, der generell nicht unterschritten werden soll.

Der automatisch bestimmte maximale Batterieladezustand kann ferner auf verschiedene Weise manuell korrigiert werden.

Zum einen kann der Benutzer eines der bestimmten Gefällestrecken und/oder einer der vorhergesagten Mengen an rekuperierter Energie über den Ladedialog auswählen, sodass der maximale Batterieladezustand in Abhängigkeit von der ausgewählten Gefällestrecke und/oder der ausgewählten Menge an rekuperierter Energie festgelegt wird. Beispielsweise können dem Fahrer mittels der Anzeige- und Eingabeeinrichtung 16 die möglichen Gefällestrecken G1 und G2 angezeigt werden, aus denen der Fahrer per Eingabe die gewünschte Gefällestrecke für die Gefällefahrt auswählen kann.

Der festgelegte maximale Batterieladezustand kann auch manuell durch den Benutzer über den Ladedialog veränderbar sein und/oder verändert werden. Beispielsweise kann der Benutzer, z. B. der Fahrer des Kraftfahrzeugs 50, den festgelegten maximalen Batterieladezustand verwerfen und einen höheren Wert eingeben, wenn er weiter bergauf fahren will, z. B. ein noch höher gelegenes Ziel erreichen will.

Ferner kann eine Strecke zur bevorstehenden Gefällefahrt durch den Benutzer manuell mittels des Navigationssystems 14 angegeben werden und der maximale Batterieladezustand in Abhängigkeit von der manuell angegebenen Strecke festgelegt werden. Der Benutzer kann so im Vorfeld eine Strecke für die Rückfahrt ins Tal festlegen und damit einen höheren Ladezustand erlauben, sodass der automatisch ermittelte maximale Batterieladezustand nicht relevant ist.

Nachdem der maximale Batterieladezustand der Traktionsbatterie 20 festgelegt worden ist, kann die Traktionsbatterie 20 bis zum festgelegten maximalen Batterieladezustand elektrisch geladen werden.

Während der anschließenden Gefällefahrt kann es zu einer Situation kommen, bei der die Speicherkapazität der Traktionsbatterie 20 bzw. der vorbestimmte Sollwert erreicht wird, bevor das Ende der gewählten Gefällestrecke erreicht ist. Dies kann z. B. der Fall sein, wenn durch den Benutzer über den von der Anzeige- und Eingabeeinrichtung 16 bereitgestellten Ladedialog fehlerhafte Parameter, die durch das Kraftfahrzeugmodell berücksichtigt werden, angegeben worden sind.

In vorbestimmten Ausnahmesituationen ist eine Überschreitung des oberen Grenzwerts zulässig ist. Solch eine Ausnahmesituation kann vorliegen, wenn anhand von Topographiedaten bestimmt wird, dass innerhalb einer vorbestimmten Zeit und/oder Wegstrecke ein Streckenabschnitt, auf dem mehr elektrische Energie verbraucht als rekuperiert wird, erreicht wird, wobei der obere Grenzwert wieder unterschritten wird.

Ferner können Gegenmaßnahmen vorgenommen werden, um die Menge an gespeicherter rekuperierter Energie nicht über den Sollwert steigen zu lassen. So kann die überschüssige Energie über einen Bremswiderstand 26 als thermische Energie an die Umgebung abgeführt werden, wobei dieser Einsatz des Bremswiderstands 26 einem Benutzer in Form einer Warnung und/oder Aufforderung zum Anhalten auf einem Display angezeigt werden kann. Zudem kann ein zeitlich begrenztes zusätzliches Hochfahren von Nebenverbrauchern, beispielsweise einer Heizung und/oder Klimatisierung, durchgeführt werden, um elektrische Energie zu verbrauchen. Ferner kann der Inverter 24 derart angesteuert werden, dass im Inverter 24 und/oder in der elektrischen Maschine 22 gezielt eine höhere Verlustleistung erzeugt wird. Diese zusätzlich erzeugte Wärme des Inverters 24 und/oder der elektrischen Maschine 22 kann über ein Kühlsystem an die Umgebung abgeführt werden.

Die Erfindung ist nicht auf die vorstehend beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 offenbart.

### Bezugszeichenliste

- 10: Vorrichtung
- 12: Steuereinrichtung
- 14: Navigationssystem
- 16: Anzeige- und Eingabeeinrichtung
- 18: Sensorik
- 20: Traktionsbatterie
- 22: Elektrische Maschine
- 24: Inverter
- 26: Bremswiderstand
- 28: Leistungselektronik
- 30-1,...,30-4: Kommunikationsleitung
- 32-1,..., 32-4: Elektrische Leitung
- 50: Kraftfahrzeug
- 60: Externe Ladequelle
- 100: Verfahren
- S1, S2, S3, S4: Verfahrensschritte
- G1, G2: Gefällestrecke

## Patentansprüche

1. Verfahren (100) zur Bereitstellung einer Speicherkapazitätsreserve in einer Traktionsbatterie (20) für ein elektrisch angetriebenes Kraftfahrzeug (50), vorzugsweise Nutzfahrzeug, für eine bevorstehende Gefällefahrt, umfassend die Schritte:
a) Erkennen (S1), ob ein elektrischer Ladevorgang der Traktionsbatterie (20) mittels einer externen Ladequelle (60) bevorsteht;
b) Bestimmen (S2) einer oder mehrerer möglicher Gefällestrecken (G1, G2) für eine bevorstehende Gefällefahrt nach dem elektrischen Ladevorgang;
c) Vorhersagen (S3) einer oder mehrerer Mengen an rekuperierter Energie, die durch das Kraftfahrzeug (50) entlang jeweils einer der bestimmten Gefällestrecken (G1, G2) rekuperiert werden; und
d) Festlegen (S4) eines maximalen Batterieladezustands der Traktionsbatterie (20) für den Ladevorgang mittels der externen Ladequelle (60) in Abhängigkeit von den vorhergesagten Mengen an rekuperierter Energie,
wobei zur Lebensdaueroptimierung der Traktionsbatterie (20) ein unterer Grenzwert, beispielsweise 15 %, und ein oberer Grenzwert, beispielsweise 85 %, für den Ladezustand der Traktionsbatterie (20) festgelegt sind, wobei nur in vorbestimmten Ausnahmesituationen eine Unterschreitung des unteren Grenzwerts und/oder eine Überschreitung des oberen Grenzwerts zulässig ist, und
wobei eine Ausnahmesituation, in der eine Überschreitung des oberen Grenzwerts zulässig ist, vorliegt, wenn anhand von Topographiedaten bestimmt wird, dass innerhalb einer vorbestimmten Zeit und/oder Wegstrecke ein Streckenabschnitt, auf dem mehr elektrische Energie verbraucht als rekuperiert wird, erreicht wird, wobei der obere Grenzwert wieder unterschritten wird.

2. Verfahren (100) nach Anspruch 1, wobei unter den vorhergesagten Mengen an rekuperierter Energie die höchste Menge ausgewählt und der maximale Batterieladezustand in Abhängigkeit von der höchsten Menge festgelegt wird, vorzugsweise wobei sich der maximale Batterieladezustand aus einer Speicherkapazität oder aus einem Sollwert für den maximalen Batterieladezustand der Traktionsbatterie (20) abzüglich der ausgewählten höchsten Menge ergibt.

3. Verfahren (100) nach Anspruch 1 oder 2, wobei
a) das Festlegen (S4) eines maximalen Batterieladezustands ein manuelles Auswählen einer der bestimmten Gefällestrecken und/oder einer der vorhergesagten Mengen an rekuperierter Energie durch einen Benutzer über einen Ladedialog umfasst und der maximale Batterieladezustand in Abhängigkeit von der ausgewählten Gefällestrecke (G1, G2) und/oder der ausgewählten Menge an rekuperierter Energie festgelegt wird, und/oder
b) der festgelegte maximale Batterieladezustand manuell durch den Benutzer über einen Ladedialog veränderbar ist und/oder verändert wird, und/oder
c) eine Strecke zur bevorstehenden Gefällefahrt durch den Benutzer manuell, beispielsweise mittels eines Navigationssystems (14), angegeben wird und der maximale Batterieladezustand in Abhängigkeit von der manuell angegebenen Strecke festgelegt wird.

4. Verfahren (100) nach einem der vorhergehenden Ansprüche, wobei die Mengen an rekuperierter Energie vorhergesagt werden mithilfe eines hinterlegten Kraftfahrzeugmodells, das zumindest einen der folgenden Parameter für die bevorstehende Gefällefahrt berücksichtigt: eine Gefälleneigung, eine Geschwindigkeit des Kraftfahrzeugs (50), eine Beladung des Kraftfahrzeugs (50), Wetter- und Temperaturdaten und einen Energieverbrauch von Kraftfahrzeugverbrauchern, beispielsweise einer Kühlung, einer Klimatisierung, einer Heizung oder von Aufbauten, beispielsweise einem Kühlkoffer.

5. Verfahren (100) nach Anspruch 4, wobei
a) das hinterlegte Kraftfahrzeugmodell aus Fahrzyklen und/oder realen Fahrzeugmessungen bestimmt ist, anhand derer experimentell die Menge an rekuperierter Energie für unterschiedliche Werte der im Kraftfahrzeugmodell berücksichtigten Parameter für unterschiedliche Gefällestrecken ermittelt wird und die beispielsweise eine Dauer und Intensität eines rekuperativen Dauerbremsvorgangs je nach Gefälleneigung berücksichtigen, und/oder
b) die Beladung des Kraftfahrzeugs (50) und/oder die Wetter- und Temperaturdaten manuell über ein Ladedialog angeben werden und/oder die Wetter- und Temperaturdaten mittels einer Sensorik (18) bestimmt werden.

6. Verfahren (100) nach einem der vorhergehenden Ansprüche, wobei der maximale Batterieladezustand ferner in Abhängigkeit von einer Speicherkapazität der Traktionsbatterie (20), einem aktuellen Ladezustand der Traktionsbatterie (20) und/oder einer aktuellen Fahrzeugmasse, einschließlich einer Zuladung, festgelegt wird.

7. Verfahren (100) nach einem der vorhergehenden Ansprüche, wobei jede Gefällestrecke der einen oder mehreren Gefällestrecken (G1, G2) anhand von Topographiedaten bestimmt wird und zumindest eine der folgenden Bedingungen vorliegen:
a) Die Gefällestrecke (G1, G2) ist für das Kraftfahrzeug (50) befahrbar;
b) die Länge der Gefällestrecke (G1, G2) liegt oberhalb einer vorbestimmten Mindestlänge;
c) ein Streckenanfang der Gefällestrecke (G1, G2) liegt innerhalb einer Distanz zu einer Ladeposition, an welcher der elektrische Ladevorgang durchgeführt wird, und weist eine Gefälleneigung oberhalb eines vorbestimmten Grenzwerts, der vorzugsweise aus Fahrzyklen und/oder realen Fahrzeugmessungen bestimmt ist, auf; und/oder
d) ein Streckenende der Gefällestrecke (G1, G2) weist eine niedrigere Geländehöhe als die Ladeposition und eine Gefälleneigung unterhalb des vorbestimmten Grenzwerts auf, vorzugsweise wobei eine an das Streckenende anschließende Fahrstrecke mit einer vorbestimmten Länge eine mittlere Gefälleneigung unterhalb des vorbestimmten Grenzwerts aufweist.

8. Verfahren (100) nach einem der vorhergehenden Ansprüche, wobei das Erkennen, ob ein elektrischer Ladevorgang der Traktionsbatterie (20) mittels einer externen Ladequelle (60) bevorsteht,
a) ein Erfassen eines aktuellen Standorts des Kraftfahrzeugs (50) und ein Prüfen, ob der erfasste Standort einer für einen elektrischen Ladevorgang geeigneten Standortkategorie entspricht, beispielsweise eine Ladestation, umfasst, und/oder
b) ein Erkennen, dass das Kraftfahrzeug (50) mit der externen Ladequelle (60) elektrisch verbunden ist, umfasst, und/oder
c) erst erfolgt, wenn sich das Kraftfahrzeug (50) im Stillstand befindet, und/oder
d) anhand einer Benutzerabfrage überprüft wird.

9. Verfahren (100) nach einem der vorhergehenden Ansprüche, ferner umfassend ein elektrisches Laden der Traktionsbatterie (20), bis der festgelegte maximale Batterieladezustand der Traktionsbatterie (20) erreicht ist.

10. Verfahren (100) nach einem der vorherigen Ansprüche, wobei zur Einhaltung des oberen Grenzwerts bei Vorliegen überschüssiger rekuperierter Energie
a) die überschüssige Energie über einen Bremswiderstand (26) als thermische Energie an die Umgebung abführbar ist, wobei dieser Einsatz des Bremswiderstands (26) einem Benutzer in Form einer Warnung und/oder Aufforderung zum Anhalten auf einem Display angezeigt wird, vorzugsweise wobei die Anzeige nur bei Erreichen eines thermisch kritischen Zustands des Bremswiderstands (26) erfolgt; und/oder
b) ein zeitlich begrenztes zusätzliches Hochfahren von Nebenverbrauchern, beispielsweise einer Heizung und/oder Klimatisierung, durchgeführt wird, und/oder
c) ein Ansteuern eines Inverters (24) des Kraftfahrzeugs (50) durchgeführt wird, derart, dass im Inverter (24) und/oder in einer elektrischen Maschine (22) des Kraftfahrzeugs (50) gezielt eine höhere Verlustleistung erzeugt wird, vorzugsweise wobei eine zusätzlich erzeugte Wärme des Inverters (24) und/oder der elektrischen Maschine (22) über ein Kühlsystem an die Umgebung abgeführt wird.

11. Vorrichtung (10) zur Bereitstellung einer Speicherkapazitätsreserve in einer Traktionsbatterie (20) für ein elektrisch angetriebenes Kraftfahrzeug (50), vorzugsweise Nutzfahrzeug, für eine bevorstehende Gefällefahrt, umfassend:
- eine Steuervorrichtung (12), die ausgebildet ist, das Verfahren (100) gemäß einem der Ansprüche 1 bis 10 durchzuführen.

12. Vorrichtung (10) nach Anspruch 11, ferner umfassend:
- eine motorisch betreibbare elektrische Maschine (22); und/oder
- eine Traktionsbatterie (20) zur Bereitstellung von elektrischer Energie für die elektrische Maschine (22) und zur Aufnahme von durch die elektrische Maschine (22) rekuperierter Energie; und/oder
- ein Navigationssystem (14) zur Bereitstellung von Topographiedaten und vorzugsweise zum Bestimmen einer oder mehrerer möglicher Gefällestrecken (G1, G2) für eine bevorstehende Gefällefahrt nach einem Ladevorgang des Kraftfahrzeugs (50); und/oder
- eine Anzeige- und Eingabeeinrichtung (16) zur Bereitstellung eines Ladedialogs für einen Benutzer des Kraftfahrzeugs (50); und/oder
- einen Bremswiderstand (26), der in einer Ausnahmesituation, vorzugsweise wenn ein oberer Grenzwert des Batterieladezustands erreicht ist oder ein thermisch kritischer Zustand, einsetzbar ist.

13. Elektrisch angetriebenes Kraftfahrzeug (50), vorzugsweise Nutzfahrzeug, aufweisend eine Vorrichtung (10) nach Anspruch 11 oder 12.

## Claims

1. Method (100) for providing a storage capacity reserve in a traction battery (20) for an electrically driven motor vehicle (50), preferably a commercial vehicle, for an upcoming downhill drive, comprising the steps:
a) detecting (S1) whether an electrical charging operation of the traction battery (20) by means of an external charging source (60) is imminent;
b) determining (S2) one or more possible downhill routes (G1, G2) for an upcoming downhill drive after the electrical charging operation;
c) predicting (S3) one or more amounts of recuperated energy recuperated by the motor vehicle (50) along each of the determined downhill routes (G1, G2); and
d) setting (S4) a maximum battery state of charge of the traction battery (20) for the charging operation by means of the external charging source (60) depending on the predicted amounts of recuperated energy,
wherein a lower limit value, for example 15%, and an upper limit value, for example 85%, are set for the battery state of charge of the traction battery (20) in order to optimize the service life of the traction battery (20), wherein falling below the lower limit value and/or exceeding the upper limit value is only permissible in predetermined exceptional situations, and
wherein an exceptional situation in which exceeding the upper limit value is permissible is present if it is determined, on the basis of topographic data, that a route section on which more electrical energy is consumed than is recuperated is reached within a predetermined time and/or distance, wherein the state of charge falls below the upper limit value again.

2. Method (100) according to claim 1, wherein among the predicted amounts of recuperated energy the highest amount is selected and the maximum battery state of charge is set depending on the highest amount, preferably wherein the maximum battery state of charge results from a storage capacity or from a set point for the maximum battery state of charge of the traction battery (20) minus the selected highest amount.

3. Method (100) according to claim 1 or 2, wherein
a) the setting (S4) of a maximum battery state of charge comprises a manual selection by a user via a charging dialog of one of the determined downhill routes and/or one of the predicted amounts of recuperated energy, and the maximum battery state of charge is set depending on the selected downhill route (G1, G2) and/or the selected amount of recuperated energy, and/or
b) the set maximum battery state of charge may be changed and/or is changed manually by the user via a charging dialog, and/or
c) a route for the upcoming downhill drive is specified manually by the user, for example by means of a navigation system (14), and the maximum battery state of charge is set depending on the manually specified route.

4. Method (100) according to any one of the preceding claims, wherein the amounts of recuperated energy are predicted using a stored motor vehicle model that takes into account at least one of the following parameters for the upcoming downhill drive: a gradient, a speed of the motor vehicle (50), a load of the motor vehicle (50), weather and temperature data, and an energy consumption by vehicle consumers, such as a cooling system, an air conditioning system, a heating system, or superstructures, such as a refrigerated box body.

5. Method (100) according to claim 4, wherein
a) the stored motor vehicle model is determined from driving cycles and/or real vehicle measurements, on the basis of which the amount of recuperated energy is determined experimentally for different values of the parameters taken into account in the motor vehicle model for different downhill routes and which, for example, take into account a duration and intensity of a recuperative continuous braking process depending on the gradient, and/or
b) the load of the motor vehicle (50) and/or the weather and temperature data are specified manually via a charging dialog and/or the weather and temperature data are determined by means of a sensor system (18).

6. Method (100) according to any one of the preceding claims, wherein the maximum battery state of charge is further set depending on a storage capacity of the traction battery (20), a current state of charge of the traction battery (20), and/or a current vehicle mass, including a payload.

7. Method (100) according to any one of the preceding claims, wherein each downhill route of the one or more downhill routes (G1, G2) is determined based on topographic data and at least one of the following conditions is met:
a) the downhill route (G1, G2) is passable for the motor vehicle (50);
b) the length of the downhill route (G1, G2) is above a predetermined minimum length;
c) a beginning of the downhill route (G1, G2) is within a distance from a charging position at which the electrical charging operation is performed and has a gradient above a predetermined limit value, which is preferably determined from driving cycles and/or real vehicle measurements; and/or
d) an end of the downhill route (G1, G2) has a lower terrain height than the charging position and a gradient below the predetermined limit value, preferably wherein a driving route of a predetermined length adjoining the end has an average gradient below the predetermined limit value.

8. Method (100) according to any one of the preceding claims, wherein detecting whether an electrical charging operation of the traction battery (20) by means of an external charging source (60) is imminent,
a) comprises detecting a current location of the motor vehicle (50) and checking whether the detected location corresponds to a location category suitable for an electrical charging operation, for example a charging station, and/or
b) comprises detecting that the motor vehicle (50) is electrically connected to the external charging source (60), and/or
c) only occurs when the motor vehicle (50) is at a standstill, and/or
d) is checked by means of a user query.

9. Method (100) according to any one of the preceding claims, further comprising electrically charging the traction battery (20) until the set maximum battery state of charge of the traction battery (20) is reached.

10. Method (100) according to any one of the preceding claims, wherein, in order to maintain the upper limit value in the presence of excess recuperated energy
a) the excess energy may be dissipated to the environment as thermal energy via a braking resistor (26), this use of the braking resistor (26) being indicated to a user in the form of a warning and/or request to stop on a display, preferably the indication only taking place when a thermally critical state of the braking resistor (26) is reached; and/or
b) a time-limited additional ramp-up of auxiliary consumers, for example a heating and/or air conditioning system, is carried out, and/or
c) an inverter (24) of the motor vehicle (50) is controlled in such a way that a higher power loss is specifically generated in the inverter (24) and/or in an electric machine (22) of the motor vehicle (50), preferably with additionally generated heat of the inverter (24) and/or of the electric machine (22) being dissipated to the environment via a cooling system.

11. Apparatus (10) for providing a storage capacity reserve in a traction battery (20) for an electrically driven motor vehicle (50), preferably a commercial vehicle, for an upcoming downhill drive, comprising:
- a control apparatus (12) configured to perform the method (100) according to any one of claims 1 to 10.

12. Apparatus (10) according to claim 11, further comprising:
- an electric machine (22) operable as a motor; and/or
- a traction battery (20) for providing electrical energy to the electric machine (22) and for receiving energy recuperated by the electric machine (22); and/or
- a navigation system (14) for providing topographic data and preferably for determining one or more possible downhill routes (G1, G2) for an upcoming downhill drive after a charging operation of the motor vehicle (50); and/or
- a display and input apparatus (16) for providing a charging dialog to a user of the motor vehicle (50); and/or
- a braking resistor (26) that can be used in an exceptional situation, preferably when an upper limit value of the battery state of charge or a thermally critical state is reached.

13. Electrically driven motor vehicle (50), preferably a commercial vehicle, comprising an apparatus (10) according to claim 11 or 12.

## Revendications

1. Procédé (100) de mise à disposition d'une réserve de capacité de stockage dans une batterie de traction (20) pour un véhicule automobile (50) à propulsion électrique, de préférence un véhicule utilitaire, en vue d'un trajet en descente à venir, comprenant les étapes suivantes :
a) détecter (S1) si une opération de charge électrique de la batterie de traction (20) au moyen d'une source de charge externe (60) est imminente ;
b) déterminer (S2) un ou plusieurs parcours en descente (G1, G2) possibles pour un trajet en descente à venir après l'opération de charge électrique ;
c) prédire (S3) une ou plusieurs quantités d'énergie récupérée qui sont récupérées par le véhicule automobile (50) le long de chacun des parcours en descente (G1, G2) déterminés ; et
d) fixer (S4) un état de charge maximal de la batterie de traction (20) pour l'opération de charge au moyen de la source de charge externe (60) en fonction des quantités d'énergie récupérée prédites,
dans lequel une valeur limite inférieure, par exemple 15 %, et une valeur limite supérieure, par exemple 85 %, sont fixées pour l'état de charge de la batterie de traction (20) afin d'optimiser la durée de vie de la batterie de traction (20), un passage en dessous de la valeur limite inférieure et/ou un dépassement de la valeur limite supérieure n'étant autorisés que dans des situations exceptionnelles prédéterminées, et
dans lequel il existe une situation exceptionnelle dans laquelle un dépassement de la valeur limite supérieure est autorisé lorsqu'il est déterminé, sur la base de données topographiques, qu'un tronçon de parcours sur lequel davantage d'énergie électrique est consommée que récupérée est atteint dans un délai prédéterminé et/ou sur une distance prédéterminée, l'état de charge repassant alors en dessous de la valeur limite supérieure.

2. Procédé (100) selon la revendication 1, dans lequel la quantité la plus élevée est sélectionnée parmi les quantités d'énergie récupérée prédites et l'état de charge maximal de la batterie est fixé en fonction de la quantité la plus élevée, de préférence dans lequel l'état de charge maximal de la batterie résulte d'une capacité de stockage ou d'une valeur de consigne pour l'état de charge maximal de la batterie de traction (20), diminuée de la quantité la plus élevée sélectionnée.

3. Procédé (100) selon la revendication 1 ou 2, dans lequel
a) la fixation (S4) d'un état de charge maximal de la batterie comprend une sélection manuelle, par un utilisateur au moyen d'un dialogue de charge, de l'un des parcours en descente déterminés et/ou de l'une des quantités d'énergie récupérée prédites, et l'état de charge maximal de la batterie est fixé en fonction du parcours en descente (G1, G2) sélectionné et/ou de la quantité d'énergie récupérée sélectionnée, et/ou
b) l'état de charge maximal de la batterie fixé est modifiable et/ou est modifié manuellement par l'utilisateur au moyen d'un dialogue de charge, et/ou
c) un parcours pour le trajet en descente à venir est indiqué manuellement par l'utilisateur, par exemple au moyen d'un système de navigation (14), et l'état de charge maximal de la batterie est fixé en fonction du parcours indiqué manuellement.

4. Procédé (100) selon l'une quelconque des revendications précédentes, dans lequel les quantités d'énergie récupérée sont prédites à l'aide d'un modèle de véhicule automobile mémorisé qui prend en compte au moins l'un des paramètres suivants pour le trajet en descente à venir : une pente descendante, une vitesse du véhicule automobile (50), un chargement du véhicule automobile (50), des données météorologiques et de température, et une consommation d'énergie de consommateurs du véhicule automobile, par exemple un système de refroidissement, un système de climatisation, un système de chauffage, ou de superstructures, par exemple une caisse frigorifique.

5. Procédé (100) selon la revendication 4, dans lequel
a) le modèle de véhicule automobile mémorisé est déterminé à partir de cycles de conduite et/ou de mesures réelles sur véhicule, sur la base desquels la quantité d'énergie récupérée est déterminée expérimentalement pour différentes valeurs des paramètres pris en compte dans le modèle de véhicule automobile pour différents parcours en descente, et qui prennent en compte, par exemple, une durée et une intensité d'une opération de freinage continu à récupération d'énergie en fonction de la pente descendante, et/ou
b) le chargement du véhicule automobile (50) et/ou les données météorologiques et de température sont indiqués manuellement au moyen d'un dialogue de charge et/ou les données météorologiques et de température sont déterminées au moyen d'un système de capteurs (18).

6. Procédé (100) selon l'une quelconque des revendications précédentes, dans lequel l'état de charge maximal de la batterie est en outre fixé en fonction d'une capacité de stockage de la batterie de traction (20), d'un état de charge actuel de la batterie de traction (20) et/ou d'une masse actuelle du véhicule, y compris une charge utile.

7. Procédé (100) selon l'une quelconque des revendications précédentes, dans lequel chaque parcours en descente parmi le ou les parcours en descente (G1, G2) est déterminé sur la base de données topographiques et au moins l'une des conditions suivantes est remplie :
a) le parcours en descente (G1, G2) est praticable par le véhicule automobile (50) ;
b) la longueur du parcours en descente (G1, G2) est supérieure à une longueur minimale prédéterminée ;
c) un début du parcours en descente (G1, G2) se situe dans les limites d'une distance par rapport à une position de charge à laquelle l'opération de charge électrique est effectuée et présente une pente descendante supérieure à une valeur limite prédéterminée, qui est de préférence déterminée à partir de cycles de conduite et/ou de mesures réelles sur véhicule ; et/ou
d) une fin du parcours en descente (G1, G2) présente une altitude du terrain inférieure à celle de la position de charge et une pente descendante inférieure à la valeur limite prédéterminée, de préférence dans lequel un parcours de conduite d'une longueur prédéterminée faisant suite à la fin du parcours présente une pente descendante moyenne inférieure à la valeur limite prédéterminée.

8. Procédé (100) selon l'une quelconque des revendications précédentes, dans lequel la détection du fait qu'une opération de charge électrique de la batterie de traction (20) au moyen d'une source de charge externe (60) est imminente
a) comprend une acquisition d'une localisation actuelle du véhicule automobile (50) et une vérification du fait que la localisation acquise correspond à une catégorie de localisation adaptée à une opération de charge électrique, par exemple une station de charge, et/ou
b) comprend une détection du fait que le véhicule automobile (50) est relié électriquement à la source de charge externe (60), et/ou
c) n'a lieu que lorsque le véhicule automobile (50) est à l'arrêt, et/ou
d) est vérifiée au moyen d'une interrogation de l'utilisateur.

9. Procédé (100) selon l'une quelconque des revendications précédentes, comprenant en outre une charge électrique de la batterie de traction (20) jusqu'à ce que l'état de charge maximal fixé de la batterie de traction (20) soit atteint.

10. Procédé (100) selon l'une quelconque des revendications précédentes, dans lequel, afin de respecter la valeur limite supérieure en présence d'énergie récupérée excédentaire,
a) l'énergie excédentaire peut être évacuée vers l'environnement sous forme d'énergie thermique par l'intermédiaire d'une résistance de freinage (26), cette utilisation de la résistance de freinage (26) étant signalée à un utilisateur sur un écran sous la forme d'un avertissement et/ou d'une invitation à s'arrêter, de préférence dans lequel le signalement n'a lieu que lorsqu'un état thermiquement critique de la résistance de freinage (26) est atteint ; et/ou
b) une montée en puissance supplémentaire, limitée dans le temps, de consommateurs auxiliaires, par exemple d'un système de chauffage et/ou d'un système de climatisation, est effectuée, et/ou
c) une commande d'un onduleur (24) du véhicule automobile (50) est effectuée de telle sorte qu'une puissance dissipée plus élevée soit générée de manière ciblée dans l'onduleur (24) et/ou dans une machine électrique (22) du véhicule automobile (50), de préférence dans lequel une chaleur supplémentaire générée par l'onduleur (24) et/ou par la machine électrique (22) est évacuée vers l'environnement par l'intermédiaire d'un système de refroidissement.

11. Dispositif (10) de mise à disposition d'une réserve de capacité de stockage dans une batterie de traction (20) pour un véhicule automobile (50) à propulsion électrique, de préférence un véhicule utilitaire, en vue d'un trajet en descente à venir, comprenant :
- un dispositif de commande (12) configuré pour mettre en œuvre le procédé (100) selon l'une quelconque des revendications 1 à 10.

12. Dispositif (10) selon la revendication 11, comprenant en outre :
- une machine électrique (22) pouvant fonctionner en moteur ; et/ou
- une batterie de traction (20) destinée à fournir de l'énergie électrique à la machine électrique (22) et à recevoir de l'énergie récupérée par la machine électrique (22) ; et/ou
- un système de navigation (14) destiné à fournir des données topographiques et, de préférence, à déterminer un ou plusieurs parcours en descente (G1, G2) possibles pour un trajet en descente à venir après une opération de charge du véhicule automobile (50) ; et/ou
- un dispositif d'affichage et de saisie (16) destiné à fournir un dialogue de charge à un utilisateur du véhicule automobile (50) ; et/ou
- une résistance de freinage (26) utilisable dans une situation exceptionnelle, de préférence lorsqu'une valeur limite supérieure de l'état de charge de la batterie ou un état thermiquement critique est atteint.

13. Véhicule automobile (50) à propulsion électrique, de préférence véhicule utilitaire, comprenant un dispositif (10) selon la revendication 11 ou 12.
